# EUROPEAN PATENT APPLICATION

(11) **EP 4 091 743 A1**
(43) Date of publication of application: **23.11.2022**
(21) Application number: 22173627.5
(22) Date of filing: 16.05.2022
(51) Int. Cl.: B22F 10/322, B22F 12/20, B22F 12/70, B22F 12/90, B23K 26/14

(54) **SYSTEM AND METHOD FOR CONTROLLING GAS FLOW TEMPERATURE IN ADDITIVE MANUFACTURING**

(30) Priority: 20.05.2021 US 202117326008
(71) Applicant: Delavan Inc., West Des Moines, IA 50265 (US)
(72) Inventor: GREENFIELD, Jacob, Granger, 50109 (US); SAMO, Joseph, Johnston, 50131 (US); OCKEN, Thomas J., Des Moines, 50310 (US); DEVORE, Nathan, Winterset, 50273 (US); HEADLEE, Dalton, West Des Moines, 50265 (US)
(74) Representative: Dehns

(57) **Abstract**

An additive manufacturing system (100) including an enclosure defining a build chamber (102), a powder bed (104) within the build chamber, an energy source (108) for directing a heat at the powder bed to melt a portion of the powder, a gas flow system (110) connected to the enclosure, a gas outlet (112) for directing gas into the build chamber for removing soot from the powder bed, and a temperature control module (150) for controlling a build chamber temperature and a gas temperature.

## Description

### Background

### Technological Field

The present disclosure relates generally to additive manufacturing, and more particularly to controlling the temperature inside of a build chamber and around a build-piece.

### Description of Related Art

Laser cladding is a generative manufacturing method for metals. The process is used in industries such as the aviation and aerospace industry, energy technology, petrochemicals, the automotive industry, as well as medical technology. When additive manufacturing takes place within an enclosed build chamber, gas flow is used to remove soot created by the welding process. The build pieces created during the process can be sensitive to the temperature of the gas. For instance, when the temperature of the gas becomes too cold or too hot, it has been found that the material can become porous and loses strength. The average temperature of the build chamber and the temperature in close proximity of the weld material is of particular importance so as not to shock the material with a colder temperature. Also it is not recommended that a temperature of the material is not kept at significantly hot temperature for a significant amount of time without cooling. Conventional additive manufacturing components and methods have generally been considered satisfactory for their intended purpose. However, there is still a need in the art for improved control of the manufacturing process. The present disclosure provides a solution for this need.

### Summary of the Invention

An additive manufacturing system includes an enclosure defining a build chamber, a powder bed within the build chamber, an energy source for directing a heat at the powder bed to melt a portion of the powder, a gas flow system connected to the enclosure, a gas outlet for directing gas into the build chamber for removing soot from the powder bed, and a temperature control module for controlling a build chamber temperature and a gas temperature.
The gas outlet can include a top outlet and a bottom outlet, can be continuously spread through a portion of the rear wall, or can include a single outlet. A portion of at least one of the outlets can be coplanar with the powder bed.

In one embodiment the top outlet and the bottom outlet can include an independent heating element for controlling a gas temperature of the gas flowing there through. In one embodiment the top outlet and the bottom outlet can include an independent heat sink element for controlling a gas temperature of the gas flowing there through.

A temperature sensor can be configured to measure temperature within the build chamber or at a build location. The temperature sensor can be configured to feed temperature data to a controller responsible for regulating the build chamber temperature and the gas temperature. The temperature control module can include a central heating element.

In a further embodiment of the disclosure, a suction can be configured to evacuate the gas from the build chamber. A heating element or heat sink can be located downstream of the suction.

A method for controlling an additive manufacturing build chamber temperature is also disclosed. The method includes producing at least a portion of a work piece by powder-laser deposition, flowing a gas over the produced portion, monitoring a temperature of at least at a first location within the build chamber, and changing a temperature of the flowing gas to change the temperature at the first location. The first location can be adjacent to the production of the work piece or at another fixed location. The first location can be furthest from the production of the work piece. The method can further include monitoring the temperature at a second location within the build chamber. The method can include flowing the gas over a second location. A temperature of the gas over the produced portion and a temperature of the gas at a second location can be the same. A temperature of the gas over the produced portion and a temperature of the gas at a second location can be different. The method can include evacuating the gas from the build chamber and cooling or heating the evacuated gas.

These and other features of the systems and methods of the subject disclosure will become more readily apparent to those skilled in the art from the following detailed description of the preferred embodiments taken in conjunction with the drawings.

### Brief Description of the Drawings

So that those skilled in the art to which the subject disclosure appertains will readily understand how to make and use the devices and methods of the subject disclosure without undue experimentation, embodiments thereof will be described in detail herein below with reference to certain figures, wherein:
FIG. 1 is a perspective view of an exemplary embodiment of a system for monitoring and controlling a build chamber temperature according to the disclosure;
FIG. 2a is schematic view of FIG. 1, showing an embodiment of the disclosure; and
FIG. 2b is schematic view of FIG. 1, showing another embodiment of the disclosure.

### Detailed Description

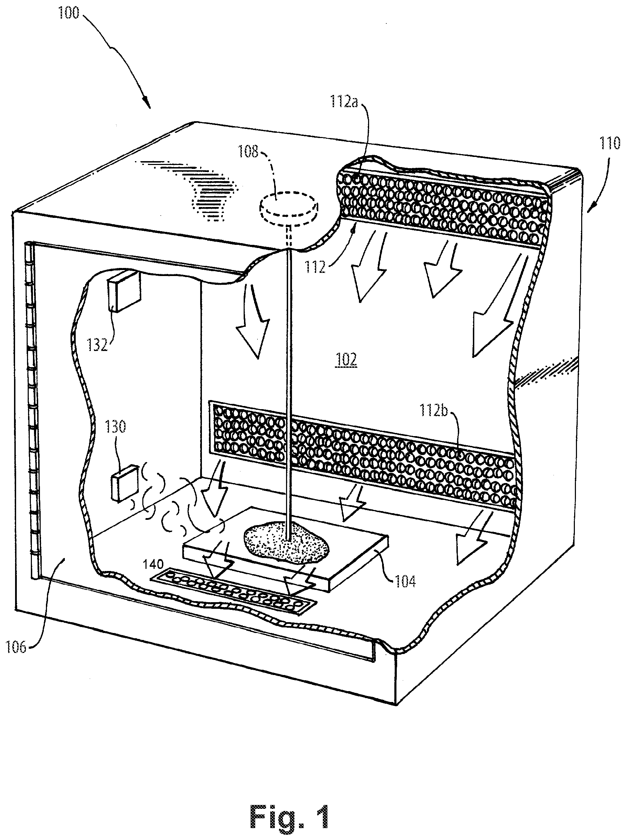

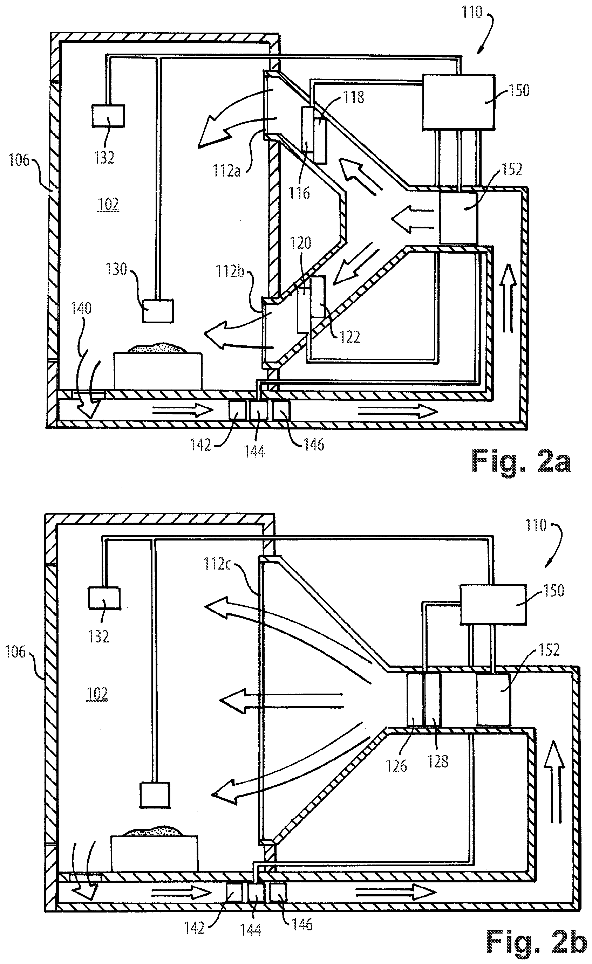

Reference will now be made to the drawings wherein like reference numerals identify similar structural features or aspects of the subject disclosure. For purposes of explanation and illustration, and not limitation, a partial view of an exemplary embodiment of a temperature control for an additive manufacturing system in accordance with the disclosure is shown in FIG. 1 and is designated generally by reference character 100. Other embodiments of additive manufacturing systems in accordance with the disclosure, or aspects thereof, are provided in FIGS. 2a and 2b, as will be described. The temperature control system can be used to better monitor and control the temperature of the gas blowing over the build plate and thus to improve the temperature control over the build chamber and weld location.

FIG. 1 shows an additive manufacturing system 100 includes an enclosure defining a build chamber 102. The build chamber 102 shown here is a laser deposition build chamber. A powder bed 104 is shown through the door 106 within the build chamber 102. Laser disposition uses an energy source 108 for directing a heat (from the laser) at the powder bed 104, where the laser hits the powder to melt a portion of the powder. Soot is typically created during the melting process and a gas flow system 110 is used to remove the soot away from the build. The gas flow system 110 includes gas outlet 112 for directing gas into the build chamber 102 from which a gas exits and blows soot away from the powder bed. When the laser melts the powder, temperatures at the powder location and average temperatures in the build chamber 102 increase, albeit not to the same levels and not the same rate. This temperature difference can lead to stresses and defects in the build material. Additionally, a temperature control module 150 is used to control the gas temperature.

Fig. 2a shows the gas outlet 112 having a top outlet 112a for blowing air along a top portion of the build chamber 102 and a bottom outlet 112b which blows air near a location coplanar with the powder bed 104. The top outlet 112a has a first heating element 116 and a first heat sink element 118, and the bottom outlet 112b includes a second heating element 120 and a second heat sink element 122 which are controlled independently from the first heating element 116 and heat sink element 118. This allows the temperature control module to better control the temperature at the build location and the average temperature in the build chamber 102. A first temperature sensor 130 is placed within the build chamber 102 directed at the build location, this sensor 130 can be an infrared sensor or other sensor capable of measuring temperature at a distance and a second temperature sensor 132 is placed within the build chamber to measure a local temperature. The temperature sensors 130/132 feed temperature data to the temperature control module 150, which regulates the gas temperature and controls the gas pump 152. Fig. 2b show a single outlet 112c continuously spread throughout at least a portion of the rear wall 124 which uses a single heat element 126 and heat sink 128 to control the temperatures.

Referring again to Figs. 1, 2a and 2b, a suction 140 is responsible for evacuating the gas along with the soot from the build chamber 102. A heating element 142, heat sink 144, and a filter 146 are placed downstream of the suction 140 to feed a clean gas and a preferred temperature gas back to the cycle.

The methods and systems of the present disclosure, as described above and shown in the drawings, provide for improved control over the temperatures and temperature gradients with the additive manufacturing build chambers. While the apparatus and methods of the subject disclosure have been shown and described with reference to preferred embodiments, those skilled in the art will readily appreciate that changes and/or modifications may be made thereto without departing from the scope of the claims.

## Claims

1. An additive manufacturing system (100) comprising:
an enclosure defining a build chamber (102);
a powder bed (104) within the build chamber;
an energy source (108) for directing a heat at the powder bed to melt a portion of the powder;
a gas flow system (110) connected to the enclosure;
a gas outlet (112) for directing gas into the build chamber for removing soot from the powder bed; and
a temperature control module (150) for controlling a build chamber temperature and a gas temperature.

2. The additive manufacturing system of claim 1, wherein the gas outlet includes a top outlet (112a) and a bottom outlet. (112b); and optionally, wherein at least a portion of one of the outlets is coplanar with the powder bed.

3. The additive manufacturing system of claim 2, wherein the top outlet and the bottom outlet include an independent heating element (116,120) for controlling a gas temperature of the gas flowing there through.

4. The additive manufacturing system of claim 2 or 3, wherein the top outlet and the bottom outlet include an independent heat sink element (118,122) for controlling a gas temperature of the gas flowing there through.

5. The additive manufacturing system of any preceding claim, further comprising a temperature sensor (130,132) configured to measure temperature within the build chamber or at a build location; and optionally wherein the temperature sensor is configured to feed temperature data to a controller (150) responsible for regulating the build chamber temperature and the gas temperature.

6. The additive manufacturing system of any preceding claim, further comprising a suction (140) configured to evacuate the gas from the build chamber; and optionally further comprising a heating element (142) or heat sink (144) located downstream of the suction.

7. The additive manufacturing system of any preceding claim, wherein the temperature control module includes a central heating element.

8. The additive manufacturing system of any preceding claim, wherein the temperature control module includes a central heat sink element.

9. A method for controlling an additive manufacturing build chamber (102) temperature comprising:
producing a portion of a workpiece by powder-laser deposition;
flowing a gas over the produced portion;
monitoring a temperature of at least at a first location within the build chamber; and
changing a temperature of the flowing gas to change the temperature at the first location.

10. The method of claim 9, wherein the first location is adjacent to the production of the work piece; or wherein the first location is furthest from the production of the work piece..

11. The method of claim 9 or 10, wherein the first location is a fixed location.

12. The method of claim 9, 10, or 11, further comprising monitoring the temperature at a second location within the build chamber.

13. The method of any of claims 9 to 12, further comprising flowing the gas over a second location.

14. The method of claim 13, wherein a temperatures of the gas over the produced portion and a temperature of the gas at a second location are the same; or wherein the temperature of the gas over the produced portion and the temperature of the gas at a second location are different.

15. The method of any of claims 9 to 14, further comprising evacuating the gas from the build chamber.
